# EUROPÄISCHE PATENTSCHRIFT

(11) **EP 4 409 188 B1**
(45) Veröffentlichungstag und Bekanntmachung des Hinweises auf die Patenterteilung: **24.12.2025**
(21) Anmeldenummer: 22797671.9
(22) Anmeldetag: 26.09.2022
(51) Int. Cl.: F16L 51/02, F16L 27/10, F16L 27/108

(54) **WÄRMEDEHNUNGSAUSGLEICHSVORRICHTUNG UND HOCHTEMPERATURKOMPONENTE MIT EINER SOLCHEN WÄRMEDEHNUNGSAUSGLEICHSVORRICHTUNG**
THERMAL EXPANSION COMPENSATION DEVICE, AND HIGH-TEMPERATURE COMPONENT COMPRISING SUCH A THERMAL EXPANSION COMPENSATION DEVICE
DISPOSITIF DE COMPENSATION DE DILATATION THERMIQUE ET COMPOSANT À HAUTE TEMPÉRATURE COMPRENANT UN TEL DISPOSITIF DE COMPENSATION DE DILATATION THERMIQUE

(30) Priorität: 28.09.2021 DE 102021210832
(43) Veröffentlichungstag der Anmeldung: 07.08.2024
(73) Patentinhaber: Robert Bosch GmbH, 70442 Stuttgart (DE)
(72) Erfinder: SCHWEITZER, Bertram, 73732 Esslingen (DE); WINKLER, Jochen, 73730 Esslingen (DE); STAHL, Thorsten, 71336 Waiblingen (DE); OBERMEYER, Sebastian, 77830 Buehlertal (DE)
(86) Internationale Anmeldenummer: PCT/EP2022/076620
(87) Internationale Veröffentlichungsnummer: WO 2023/052281

(56) Entgegenhaltungen:
- EP-A1- 0 759 502
- FR-A1- 2 588 916

## Beschreibung

### Stand der Technik

Es ist bereits eine Wärmedehnungsausgleichsvorrichtung für eine Hochtemperaturkomponente, insbesondere für einen Nachbrenner, eines Brennstoffzellensystems, mit einem Grundkörper zu einer Aufnahme von thermomechanischer Energie während einer Temperaturerhöhung der Hochtemperaturkomponente, wobei der Grundkörper einen Zentralkanal mit einer Kanalmittenachse zu einem Durchlass eines Prozessfluids der Hochtemperaturkomponente aufweist, vorgeschlagen worden.

Die Dokumente EP 0 759 502 A1, FR 2 588 916 A1 sowie DE 10 2006 029 110 A1 offenbaren jeweils eine Wärmedehnungsausgleichsvorrichtung der genannten Art.

### Offenbarung der Erfindung

Die Erfindung geht aus von einer Wärmedehnungsausgleichsvorrichtung für eine Hochtemperaturkomponente, insbesondere für einen Nachbrenner, eines Brennstoffzellensystems, mit einem Grundkörper zu einer Aufnahme von thermomechanischer Energie während einer Temperaturerhöhung der Hochtemperaturkomponente, wobei der Grundkörper einen Zentralkanal mit einer Kanalmittenachse zu einem Durchlass eines Prozessfluids der Hochtemperaturkomponente aufweist.

Es wird vorgeschlagen, dass der Grundkörper in einer zur Kanalmittenachse parallelen Schnittebene einen gekrümmten Wärmedehnungsausgleichsbereich aufweist, der eine zumindest teilweise um den Zentralkanal umlaufende Wölbung ausbildet. Die Wärmedehnungsausgleichsvorrichtung ist insbesondere dazu vorgesehen, zwischen der Hochtemperaturkomponente und einem Fluidanschluss des Brennstoffzellensystems angeordnet zu werden. Der Fluidanschluss kann zu einer Aufnahme des Prozessfluids von der Hochtemperaturkomponente und/oder zu einer Abgabe des Prozessfluids an die Hochtemperaturkomponente vorgesehen sein. Insbesondere ist die Hochtemperaturkomponente dazu vorgesehen, eine thermische Längenausdehnung der Hochtemperaturkomponente und/oder des Fluidanschlusses zu kompensieren. Bevorzugt ist die Wärmedehnungsausgleichsvorrichtung dazu vorgesehen, eine thermische Längenausdehnung der Hochtemperaturkomponenten zu kompensieren, welche parallel zu der Kanalmittelachse erfolgt. Insbesondere ist die Wärmedehnungsausgleichsvorrichtung dazu vorgesehen, eine, insbesondere zusätzliche, mechanische Spannung zwischen der Hochtemperaturkomponente und dem Fluidanschluss bei einer Temperaturerhöhung der Hochtemperaturkomponente und/oder des Fluidanschlusses unterhalb eines Toleranzwerts zu halten. Insbesondere ist die Wärmedehnungsausgleichsvorrichtung dazu vorgesehen, sich bei einer Temperaturerhöhung der Hochtemperaturkomponente und/oder des Fluidanschlusses durch Aufnahme der thermomechanischen Energie zu verformen. Besonders bevorzugt ist die Hochtemperaturkomponente dazu vorgesehen, sich bis zu einem Erreichen einer maximalen Betriebstemperatur der Hochtemperaturkomponenten zumindest im Wesentlichen elastisch zu verformen. Unter "im Wesentlichen elastisch" soll insbesondere verstanden werden, dass ein elastischer Anteil einer maximalen Dehnung der Wärmedehnungsausgleichsvorrichtung mehr als 99 % der gesamten maximalen Dehnung ausmacht, bevorzugt mehr als 99,25 %, besonders bevorzugt mehr als 99,4 %. Insbesondere ist die Wärmedehnungsausgleichsvorrichtung dazu vorgesehen, bei einer Abkühlung der Hochtemperaturkomponente und/oder des Fluidanschlusses eine ursprüngliche Form der Wärmedehnungsausgleichsvorrichtung vor einer Temperaturerhöhung der Hochtemperaturkomponente und/oder des Fluidanschlusses anzunehmen. Insbesondere ist die Wärmedehnungsausgleichsvorrichtung dazu vorgesehen, mehrere Heizzyklen, insbesondere mehr als 5, bevorzugt mehr als 10, insbesondere mehr als 50 Heizzyklen, zu überstehen, bevor ein Austausch der Wärmedehnungsausgleichsvorrichtung notwendig ist. Besonders bevorzugt ist ein Anteil einer plastische Verformung der maximalen Dehnung der Wärmedehnungsausgleichsvorrichtung und insbesondere auch der angrenzenden Bauteile derart gering, dass die auftretende plastische Verformung über eine durchschnittliche Anzahl der Heizzyklen eines Systemlebens der Brennstoffzellensystems ohne Ausfall ertragen werden kann.

Vorzugsweise ist die Wärmedehnungsausgleichsvorrichtung für Betriebstemperaturen der Hochtemperaturkomponente von mehr als 300°C, bevorzugt mehr als 400°C, besonders bevorzugt von mehr als 550°C ausgelegt. Insbesondere ist die Wärmedehnungsausgleichsvorrichtung für Betriebstemperaturen der Hochtemperaturkomponente von unter 1000°C, insbesondere unter 800°C ausgelegt. Die Hochtemperaturkomponente ist beispielsweise ein Nachbrenner des Brennstoffzellensystems, ein Reformer des Brennstoffzellensystems, eine Hochtemperaturbrennstoffzelle, insbesondere eine Festoxidbrennstoffzelle, ein Vorheizer des Brennstoffzellensystems, ein Prozessfluidverteiler des Brennstoffzellensystems oder dergleichen. Der Fluidanschluss kann Teil einer weiteren Hochtemperaturkomponente des Brennstoffzellensystems sein, Teil eines Prozessfluidleitungssystems des Brennstoffzellensystems oder Teil einer Niedertemperaturkomponente des Brennstoffzellensystems. Eine Niedertemperaturkomponente des Brennstoffzellensystems ist beispielsweise ein Prozessfluidförderelement, ein Wärmeübertrager oder dergleichen. Das Prozessfluid kann insbesondere ein Brennstoff, ein sauerstoffhaltiges Fluid, insbesondere Luft, zur Umsetzung des Brennstoffs oder ein durch Umsetzung des Brennstoffs entstehendes Abgas sein.

Vorzugsweise ist der Grundkörper aus Metall, besonders bevorzugt aus Edelstahl, beispielsweise aus Werkstoff 1.4509, gefertigt. Bevorzugt ist die gesamte Wärmedehnungsausgleichsvorrichtung aus einem einzelnen Blech, insbesondere durch Umformung, gefertigt. Alternativ weist der Grundkörper mehrere separat ausgebildete Segmente auf, beispielsweise zwei Halbschalen oder dergleichen. Vorzugsweise weist der Grundkörper eine Fluidfläche auf, welche insbesondere dazu vorgesehen ist, bei einem Betrieb der Hochtemperaturbrennstoffzelle im Kontakt mit dem Prozessfluid zu stehen. Vorzugsweise weist der Grundkörper eine Außenfläche auf. Insbesondere bilden die Außenfläche und die Fluidfläche die beiden größten Oberflächen des Grundkörpers. Die Außenfläche und die Fluidfläche verlaufen vorzugsweise zumindest im Wesentlichen parallel zueinander. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere ist eine zu der Außenfläche und/oder der Fluidfläche senkrechte Materialstärke des Grundkörpers vorzugsweise an zumindest den meisten Punkten der Fluidfläche und/oder der Außenfläche zumindest im Wesentlichen gleich groß. Unter "an den meisten Punkten" soll insbesondere an mehr als 50 %, bevorzugt an mehr als 75 %, besonders bevorzugt an mehr als 90 %, aller Punkte verstanden werden. Unter "im Wesentlichen gleich" soll insbesondere gleich bis auf eine Variation von höchstens 75 %, bevorzugt von höchstens 50 %, besonders bevorzugt von höchstens 25 %, verstanden werden. Die Materialstärke ist insbesondere mehr als 10 Mal, bevorzugt mehr als 20 Mal kleiner als eine Wurzel des maximalen Flächeninhalts der Außenfläche und/oder der Fluidfläche.

Der Grundkörper umfasst vorzugsweise eine Haupterstreckungsebene, welche zumindest im Wesentlichen senkrecht zu der Kanalmittenachse verläuft. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Insbesondere ist eine maximale Längserstreckung des Grundkörpers parallel zu der Kanalmittenachse kleiner als eine maximale Quererstreckung des Grundkörpers senkrecht zu der Kanalmittenachse. Die Außenfläche bildet insbesondere eine Außenwandung des Zentralkanals aus. Die Fluidfläche bildet insbesondere eine Innenwandung des Zentralkanals aus.

Der Wärmedehnungsausgleichsbereich kann eine einzelne Wölbung ausbilden oder mehrere Wölbungen ausbilden, welche in der zur Kanalachse parallelen Schnittebene insbesondere ein wellenförmiges Profil ausbilden. Insbesondere lässt die Wölbung die Außenfläche in der zur Kanalachse parallelen Schnittebene in dem Wärmedehnungsausgleichsbereich konkav verlaufen. Insbesondere lässt die Wölbung die Fluidfläche in der zur Kanalachse parallelen Schnittebene in dem Wärmedehnungsausgleichsbereich konvex verlaufen. Insbesondere ist die Außenfläche einem Krümmungsmittelpunkt eines die Wölbung beschreibenden Krümmungsradius zugewandt und die Fluidfläche abgewandt angeordnet. Bei mehreren Wölbungen verläuft die Außenfläche und die Fluidfläche in dem Wärmedehnungsausgleichsbereich insbesondere abwechselnd konkav und konvex bzw. konvex und konkav. Die Wölbung kann einen einzigen Krümmungsradius aufweisen oder Wölbungsabschnitte mit unterschiedlichen Krümmungsradien aufweisen. Ein Übergang zwischen unterschiedlichen Wölbungsabschnitten ist vorzugsweise glatt, insbesondere sprungfrei und/oder knickfrei, ausgebildet. Der die Wölbung beschreibenden Krümmungsradius oder die die Wölbungsabschnitte beschreibende Krümmungsradien liegen vorzugsweise in der zur Kanalachse parallelen Schnittebene.

Unter "teilweise um den Zentralkanal umlaufend" soll insbesondere auf einem den Zentralkanal umgebenden, vorzugsweise zu dem Zentralkanal konzentrischen, Kreis angeordnet verstanden werden, wobei eine Länge der Wölbung entlang des Kreises zumindest 50 %, bevorzugt zumindest 75 &, besonders bevorzugt mehr als 90 %, eines Umfangs des Kreises entspricht. Besonders bevorzugt ist der Grundkörper als Rotationskörper ausgebildet, welcher insbesondere bezüglich der Kanalmittenachse rotationssymmetrisch oder drehsymmetrisch ausgebildet ist. Darunter, dass ein Abschnitt einer Fläche in eine Richtung verläuft oder aufweist, soll insbesondere verstanden werden, dass eine an der Fläche anliegende Tangente diese Richtung aufweist, wobei die Tangente in der zur Kanalmittenachse parallelen Schnittebene liegt. Insbesondere beziehen sich alle geometrischen Angaben zu Erstreckungen, Verläufen und Größenverhältnissen, sofern nicht explizit anders angegeben, auf die zur Kanalmittenachse parallele Schnittebene. Die Kanalmittenachse liegt vorzugsweise in der zur Kanalmittenachse parallelen Schnittebene. Insbesondere ist der Grundkörper bezüglich der zur Kanalmittenachse parallelen Schnittebene spiegelsymmetrisch.

Durch die erfindungsgemäße Ausgestaltung der Wärmedehnungsausgleichsvorrichtung kann eine thermische Ausdehnung der Hochtemperaturvorrichtung vorteilhaft effektiv durch eine Verformung der Wärmedehnungsausgleichsvorrichtung kompensiert werden. Insbesondere kann eine Kraftübertragung zwischen der Hochtemperaturvorrichtung und dem Fluidanschluss vorteilhaft klein gehalten werden. Ferner kann die Wölbung vorteilhaft eine Sollverformungsstelle des Grundkörpers vorgeben, welche sich bei einer thermischen Ausdehnung der Hochtemperaturkomponente verformt. Insbesondere kann ein Risiko einer Materialermüdung der Wärmedehnungsausgleichsvorrichtung vorteilhaft gering gehalten werden. Ferner kann eine vorteilhaft lineare Verformung des Grundkörpers erreicht werden. Insbesondere kann ein Risiko spontaner Zustandswechsel des Grundkörpers aufgrund einer Bifurkation vorteilhaft gering gehalten werden.

Weiter wird vorgeschlagen, dass der Zentralkanal durch eine zu der Kanalmittenachse senkrechte Aufnahmeebene und eine zu der Kanalmittenachse senkrechte Anschlussebene begrenzt ist, wobei eine Aufnahmeöffnung des Zentralkanals für die Hochtemperaturkomponente in der Aufnahmeebene angeordnet ist und der Wärmedehnungsausgleichsbereich teilweise an der Anschlussebene anliegt, wobei ein den Zentralkanal umgebender Peripheriebereich des Grundkörpers aufgrund der Wölbung zumindest abschnittsweise in Richtung der Aufnahmeebene geneigt ist. Der Zentralkanal schließt insbesondere über die Wölbung an den Peripheriebereich an, wobei der Zentralkanal und der Peripheriebereich je einen Teil des Wärmedehnungsausgleichsbereichs ausbilden. Der Peripheriebereich ist insbesondere kuppelförmig ausgebildet und umgibt den Zentralkanal in zumindest einer zur Kanalmittenachse senkrechten Ebene, welche zwischen der Aufnahmeebene und der Anschlussebene verläuft. Insbesondere verlaufen die Außenfläche und die Fluidfläche an dem Zentralkanal ausgehend von der Aufnahmeebene zumindest im Wesentlichen parallel zu der Kanalmittenachse. Vorzugsweise führt die Wölbung die Außenfläche und die Fluidfläche auf einen zu der Kanalmittenachse zumindest im Wesentlichen senkrechten, insbesondere von der Kanalmittenachse wegweisenden, Verlauf. Insbesondere erstreckt sich ein die Wölbung beschreibender Kreisbogen über mehr als 80°, bevorzugt über mehr als 85°, besonders bevorzugt über mehr als 89°, optional über mehr als 90°. Insbesondere weist der Zentralkanal einen von der Aufnahmeebene zu der Anschlussebene zunehmenden Innendurchmesser auf. Insbesondere liegt die Fluidfläche an der Anschlussebene an, wenn sie aufgrund der Wölbung einen zur Kanalmittenachse senkrechten Verlauf annimmt. In dem Peripheriebereich führt die Wölbung die Außenfläche und die Fluidfläche vorzugsweise von einem zur Kanalmittenachse senkrechten Verlauf zu einem zur Aufnahmeebene zugewandten Verlauf. Insbesondere kann ein Krümmungsradius eines den Zentralkanal bildenden Wölbungsabschnitts der Wölbung und ein weiterer Krümmungsradius eines den Peripheriebereich bildenden Wölbungsabschnitts der Wölbung gleichgroß oder unterschiedlich groß sein. Optional umfasst der Peripheriebereich zumindest einen Abschnitt, der parallel zur Aufnahmeebene verläuft oder zur Aufnahme zugeneigt verläuft. Durch die erfindungsgemäße Ausgestaltung der Wärmedehnungsausgleichsvorrichtung kann der Hochtemperaturkomponente entlang der Kanalmitteachse ein vorteilhaft langer Expansionsweg zur Verfügung gestellt werden. Insbesondere kann eine direkte Druckbelastung entlang des Zentralkanals aufgrund einer thermischen Ausdehnung der Hochtemperaturkomponente vorteilhaft auf den größeren Peripheriebereich umgelenkt werden.

Weiterhin wird vorgeschlagen, dass der zur Aufnahmeebene hin gewölbte Peripheriebereich des Grundkörpers in einer Richtung parallel zur Kanalmittenachse sich über weniger als 34 % einer, insbesondere der bereits genannten, maximalen Längserstreckung des Grundkörpers parallel zur Kanalmittenachse erstreckt. Besonders bevorzugt ist der Peripheriebereich zumindest im Wesentlichen vollständig, insbesondere zu mehr als 50 %, bevorzugt zu mehr als 75 %, besonders bevorzugt zu mehr als 90 %, zwischen der Aufnahmeebene und Anschlussebene angeordnet. Insbesondere ist die maximale Längserstreckung des Grundkörpers parallel zur Kanalmittenachse gleich einem Abstand der Aufnahmeebene und einer Anschlussebene voneinander. Besonders bevorzugt ist die maximale Längserstreckung des Grundkörpers gleichgroß wie eine maximale Kanallängserstreckung des Zentralkanals parallel zu der Kanalmittenachse. Eine maximale Peripherielängserstreckung des Peripheriebereichs parallel zur Kanalmittenachse ist vorzugsweise kleiner als die maximale Längserstreckung des Grundkörpers, insbesondere zumindest um 34 %, bevorzugt um zumindest 50 % kleiner, besonders bevorzugt um mehr als 66 %, kleiner als die maximale Längserstreckung des Grundkörpers. Insbesondere ist die maximale Peripherielängserstreckung zumindest doppelt so groß, bevorzugt mehr als fünf Mal so groß wie die Materialstärke des Grundkörpers in dem Peripheriebereich. Durch die erfindungsgemäße Ausgestaltung der Wärmedehnungsausgleichsvorrichtung kann die Wölbung mit vorteilhaft großen Krümmungsradien ausgestaltet werden. Insbesondere kann eine vorteilhaft großflächige und insbesondere vorteilhaft homogene Verteilung einer Dehnungsbelastung des Wärmedehnungsausgleichsbereichs erreicht werden. Insbesondere können lokale Extrema einer Dehnungsbelastung des Wärmedehnungsausgleichsbereichs vorteilhaft klein gehalten werden.

Ferner wird vorgeschlagen, dass ein Krümmungsradius des gekrümmten Wärmedehnungsausgleichsbereichs, insbesondere der bereits genannte Krümmungsradius des den Zentralkanal bildenden Wölbungsabschnitts, mehr als 50 % einer, insbesondere der bereits genannten, maximalen Längserstreckung des Grundkörpers parallel zur Kanalmittenachse entspricht. Insbesondere erstreckt sich ein zur Kanalmittenachse zumindest im Wesentlichen parallel verlaufender Bereich des Zentralkanals über weniger als 50 % der maximalen Längserstreckung des Grundkörpers. Vorzugsweise ist der Krümmungsradius größer als die maximale Peripherielängserstreckung. Insbesondere verdeckt der Peripheriebereich aus einer Blickrichtung senkrecht auf die Kanalmittenachse die Wölbung nur unvollständig. Durch die erfindungsgemäße Ausgestaltung der Wärmedehnungsausgleichsvorrichtung kann die Wärmedehnungsausgleichsvorrichtung vorteilhaft flach gehalten werden. Insbesondere kann die maximale Längserstreckung vorteilhaft gering gehalten werden. Insbesondere kann die Wärmedehnungsausgleichsvorrichtung vorteilhaft auch bei wenig verfügbarem Bauraum innerhalb des Brennstoffzellensystems verwendet werden.

Darüber hinaus wird vorgeschlagen, dass sich der gekrümmte Wärmedehnungsausgleichsbereich über mehr als 50 % einer Quererstreckung des Grundkörpers erstreckt, welche ausgehend von dem Zentralkanal in eine zur Kanalmittenachse quer verlaufende Richtung bis zu einem Außenrand des Grundkörpers verläuft. Die Quererstreckung entspricht insbesondere der Hälfte der maximalen Quererstreckung des Grundkörpers abzüglich eines, insbesondere kleinsten, Außenradius des Zentralkanals. Besonders bevorzugt erstreckt sich der Wärmedehnungsausgleichsbereich über mehr als 75 % der Quererstreckung. Vorzugsweise umfasst der Peripheriebereich, insbesondere an dem Außenrand, eine Fixierungszone, zu einem Fixieren der Wärmedehnungsausgleichsvorrichtung an dem Fluidanschluss. Die Fixierungszone ist besonders bevorzugt als Schweißfläche ausgebildet, alternativ als Flansch. Die Fixierungszone verläuft vorzugsweise zumindest im Wesentlichen parallel zu der Anschlussebene. Bevorzugt erstreckt sich die Fixierungszone ausgehend von dem Außenrand in Richtung des Zentralkanals über weniger als 50 % der Quererstreckung. Besonders bevorzugt erstreckt sich die Wölbung über mehr als 50 % der Quererstreckung. Durch die erfindungsgemäße Ausgestaltung der Wärmedehnungsausgleichsvorrichtung kann eine noch bessere Verteilung einer Dehnungsbelastung des Wärmedehnungsausgleichsbereichs erreicht werden.

Des Weiteren wird vorgeschlagen, dass sich der Grundkörper aufgrund der Wölbung in eine von einer, insbesondere der bereits genannten, Aufnahmeöffnung des Zentralkanals für die Hochtemperaturkomponente abgewandte und zur Kanalmittenachse parallele Richtung wölbt. Insbesondere geht die Außenfläche und die Fluidfläche aufgrund der Wölbung stufenlos und insbesondere knickfrei von dem Zentralkanal in den Peripheriebereich über. Vorzugsweise ist ein Abstand eines zu dem Krümmungsradius des den Zentralkanal bildenden Wölbungsabschnitts gehörenden Mittelpunkts größer oder gleich einem maximalen Innenradius des Zentralkanals. Besonders bevorzugt vergrößert sich der Innendurchmesser des Zentralkanals, und insbesondere der Außendurchmesser des Zentralkanals, von der Aufnahmeebene zu der Anschlussebene monoton. Insbesondere ist die Wölbung dazu ausgebildet in den Fluidanschluss hineinzuragen. Insbesondere ragt der Zentralkanal aufgrund der Wölbung über die Fixierzone des Peripheriebereichs zu einer Anordnung der Wärmedehnungsausgleichsvorrichtung an dem Fluidanschluss hinaus. Durch die erfindungsgemäße Ausgestaltung der Wärmedehnungsausgleichsvorrichtung ergibt sich eine vorteilhaft kleine Hebelwirkung bei einer Krafteinwirkung durch eine thermische Ausdehnung der Hochtemperaturkomponente auf die Wölbung.

Ferner wird vorgeschlagen, dass der gekrümmte Wärmedehnungsausgleichsbereich zumindest einen bezogen auf die Kanalmittenachse achsnahen Krümmungsradius, insbesondere den bereits genannten Krümmungsradius, und einen achsfernen Krümmungsradius, insbesondere den bereits genannten weiteren Krümmungsradius, aufweist, wobei der achsferne Krümmungsradius größer ist als der achsnahe Krümmungsradius. Achsnah und achsfern beziehen sich vorzugsweise auf die von den Krümmungsradien beschriebenen Wölbungsabschnitte der Wölbung. Insbesondere ist der Krümmungsradius des den Zentralkanal ausbildenden Wölbungsabschnitts der Wölbung näher an der Kanalmittenachse als der weitere Krümmungsradius des den Peripheriebereich ausbildenden Wölbungsabschnitts der Wölbung. Die zu dem Krümmungsradius und dem weiteren Krümmungsradius gehörenden Mittelpunkte sind vorzugsweise gleichweit von der Kanalmittenachse entfernt. Vorzugsweise ist der weitere Krümmungsradius zumindest 25 % größer als, insbesondere mehr als 75 % größer als, optional mehr als doppelt so groß wie, der Krümmungsradius. Besonders bevorzugt erstreckt sich ein durch den weiteren Krümmungsradius beschriebener Kreisbogen auf der Außenfläche und/oder der Fluidfläche über weniger als 90°, insbesondere über weniger als 75°, besonders bevorzugt über weniger als 55°. Durch die erfindungsgemäße Ausgestaltung der Wärmedehnungsausgleichsvorrichtung kann der Wärmedehnungsausgleichsbereich über eine vorteilhaft große Fläche verteilt werden und insbesondere gleichzeitig die Wärmedehnungsausgleichsvorrichtung vorteilhaft flach gehalten werden.

Des Weiteren wird vorgeschlagen, dass der gekrümmte Wärmedehnungsausgleichsbereich zumindest einen bezogen auf die Kanalmittenachse achsnahen Krümmungsradius, insbesondere den bereits genannten Krümmungsradius und/oder den weiteren Krümmungsradius, und einen achsfernen Krümmungsradius aufweist, wobei der achsferne Krümmungsradius und der achsnahe Krümmungsradius je einen gegensinnigen Wölbungsabschnitt der Wölbung des Grundkörpers beschreiben. Vorzugsweise weist der Peripheriebereich zumindest einen zusätzlichen Krümmungsradius auf, insbesondere um die Außenfläche und die Fluidfläche von der Wölbung in die Fixierzone überzuführen. Ein zu dem zusätzlichen Krümmungsradius gehörender Mittelpunkt und der zu dem Mittelpunkt des Krümmungsradius gehörende weitere Mittelpunkt sind vorzugsweise auf verschiedenen Seiten des Grundkörpers angeordnet. Insbesondere ist die Fluidfläche dem Mittelpunkt des zusätzlichen Krümmungsradius zugewandt angeordnet. Der zusätzliche Krümmungsradius ist insbesondere dazu vorgesehen, die Wölbung in die Fixierzone, insbesondere sprungfrei und/oder knickfrei, überzuführen. Insbesondere ist der durch den zusätzlichen Krümmungsradius beschriebene Übergangsabschnitt der Wölbung weiter von der Kanalmittenachse entfernt als die durch den Krümmungsradius bzw. durch den weiteren Krümmungsradius beschriebenen Wölbungsabschnitte. Der zusätzliche Krümmungsradius ist vorzugsweise größer als der Krümmungsradius. Vorzugsweise ist der zusätzliche Krümmungsradius zumindest im Wesentlichen gleich groß, insbesondere bis auf weniger als 25 %, bevorzugt bis auf weniger als 10 %, wie der weitere Krümmungsradius. Durch die erfindungsgemäße Ausgestaltung der Wärmedehnungsausgleichsvorrichtung kann die Wärmedehnungsausgleichsvorrichtung vorteilhaft einfach montiert werden. Insbesondere kann in einem an dem Fluidanschluss angeordneten Zustand ein vorteilhaft großer Freiraum um den Wärmedehnungsausgleichsbereich herum erreicht werden. Insbesondere kann bei einer Verformung des Wärmedehnungsausgleichsbereichs ein Risiko eines Kontakts des Wärmedehnungsausgleichsbereichs mit dem Fluideinlass vorteilhaft gering gehalten werden.

Darüber hinaus wird eine Hochtemperaturkomponente, insbesondere Nachbrenner, für ein Brennstoffzellensystem mit zumindest einer erfindungsgemäßen Wärmedehnungsausgleichsvorrichtung vorgeschlagen. Die Hochtemperaturkomponente umfasst insbesondere zumindest eine Fluidkammer, insbesondere eine Brennkammer oder eine Katalysatorkammer, zu einer Bearbeitung des Prozessfluids. Vorzugsweise umfasst die Hochtemperaturkomponente zumindest einen Prozessfluideinlass zu einem Einlassen des Prozessfluids oder einen Ausgangsstoff des Prozessfluids in die Fluidkammer. Vorzugsweise umfasst die Hochtemperaturkomponente zumindest einen Prozessfluidauslass zu einem Auslassen des Prozessfluids oder eines Produkts des Prozessfluids aus der Fluidkammer. Insbesondere ist der Prozessfluideinlass oder der Prozessfluidauslass an der Wärmedehnungsausgleichsvorrichtung angeordnet. Insbesondere weist der Prozessfluideinlass oder der Prozessfluidauslass ein Verbindungselement auf, welches an der Wärmedehnungsausgleichsvorrichtung angeordnet ist. Das Verbindungselement ist bevorzugt als Schweißfläche ausgebildet. Das Verbindungselement kann insbesondere in die Aufnahmeöffnung des Zentralkanals hineingreifen oder den Zentralkanal umgreifen. Insbesondere ist die Wölbung auf einer von der Hochtemperaturkomponente abgewandten Seite der Wärmedehnungsausgleichsvorrichtung angeordnet. Optional weist die Hochtemperaturkomponente eine weitere Wärmedehnungsausgleichsvorrichtung auf, wobei die Wärmedehnungsausgleichsvorrichtung an dem Prozessfluidauslass und die weitere Wärmedehnungsausgleichsvorrichtung an dem Prozessfluideinlass angeordnet ist. Durch die erfindungsgemäße Ausgestaltung der Wärmedehnungsausgleichsvorrichtung kann die Hochtemperaturkomponente vorteilhaft kompakt verbaut werden. Insbesondere kann die Hochtemperaturvorrichtung, insbesondere trotz kompakter Verbauung, vorteilhaft sicher und verschleißarm betrieben werden.

Die erfindungsgemäße Wärmedehnungsausgleichsvorrichtung und/oder die erfindungsgemäße Hochtemperaturkomponente sollen/soll hierbei nicht auf die oben beschriebene Anwendung und Ausführungsform beschränkt sein. Insbesondere können/kann die erfindungsgemäße Wärmedehnungsausgleichsvorrichtung und/oder die erfindungsgemäße Hochtemperaturkomponente zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

Die Erfindung ist durch die beigefügten Ansprüche definiert.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäße Hochtemperaturkomponente mit einer erfindungsgemäßen Wärmedehnungsausgleichsvorrichtung,
- Fig. 2: eine schematische Perspektivdarstellung der erfindungsgemä-βen Wärmedehnungsausgleichsvorrichtung,
- Fig. 3: einen schematischen Querschnitt der erfindungsgemäßen Wärmedehnungsausgleichsvorrichtung,
- Fig. 4: einen schematischen Querschnitt einer weiteren Ausgestaltung einer erfindungsgemäßen Wärmedehnungsausgleichsvorrichtung,
- Fig. 5: einen schematischen Querschnitt einer alternativen Ausgestaltung einer erfindungsgemäßen Wärmedehnungsausgleichsvorrichtung und
- Fig. 6: einen schematischen Querschnitt einer weiteren alternativen Ausgestaltung einer erfindungsgemäßen Wärmedehnungsausgleichsvorrichtung.

### Beschreibung der Ausführungsbeispiele

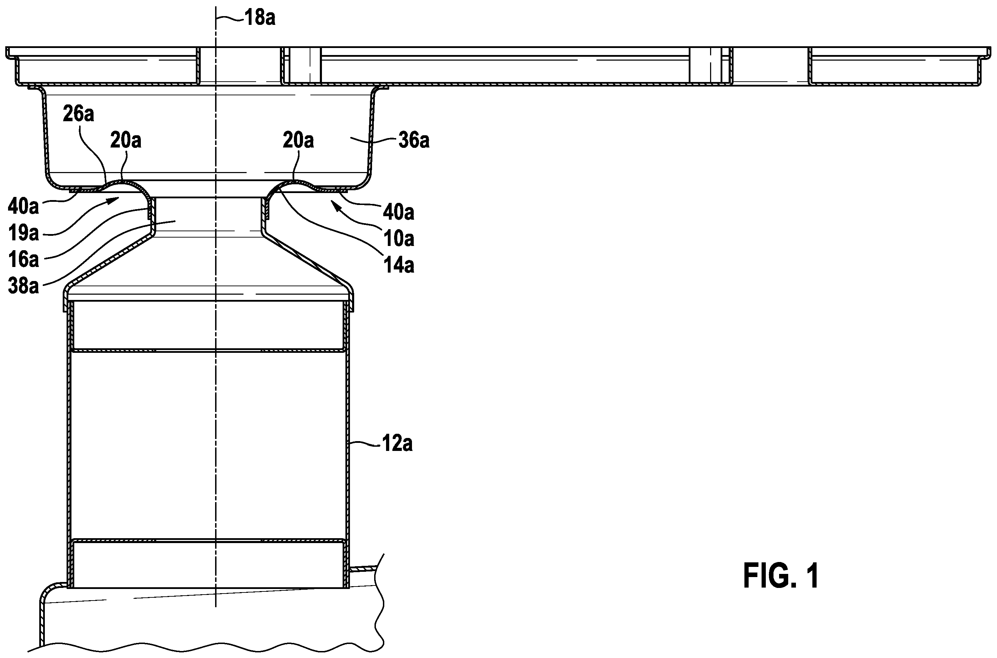

Figur 1 zeigt eine Hochtemperaturkomponente 12a für ein Brennstoffzellensystem. Die Hochtemperaturkomponente 12a ist beispielsweise als Nachbrenner ausgebildet. Die Hochtemperaturkomponente 12a umfasst zumindest eine Wärmedehnungsausgleichsvorrichtung 10a. Insbesondere ist ein Prozessfluidauslass 38a der Hochtemperaturkomponente 12a an der Wärmedehnungsausgleichsvorrichtung 10a angeordnet. Die Wärmedehnungsausgleichsvorrichtung 10a ist vorzugsweise an einem Fluidanschluss 36a des Brennstoffzellensystems angeordnet. Der Fluidanschluss 36a ist beispielsweise zu einer Weiterleitung eines den Nachbrenner über den Prozessfluidauslass 38a ausgelassenen Abgases an einen Wärmeübertrager des Brennstoffzellensystems vorgesehen. Die Wärmedehnungsausgleichsvorrichtung 10a umfasst einen Zentralkanal 16a zu einem Durchlass des Abgases. Der Prozessfluidauslass 38a ist insbesondere an dem Zentralkanal 16a angeordnet, insbesondere mit dem Zentralkanal 16a verschweißt.

Die Wärmedehnungsausgleichsvorrichtung 10a umfasst einen Grundkörper 14a zu einer Aufnahme von thermomechanischer Energie während einer Temperaturerhöhung der Hochtemperaturkomponente 12a. Der Grundkörper 14a bildet den Zentralkanal 16a aus. Der Zentralkanal 16a weist eine Kanalmittenachse 18a auf. Insbesondere sind der Zentralkanal 16a und der Prozessfluidauslass 38a bezüglich der Kanalmittenachse 18a konzentrisch angeordnet. Der Grundkörper 14a weist in einer zur Kanalmittenachse 18a parallelen Schnittebene einen gekrümmten Wärmedehnungsausgleichsbereich 19a auf. Der gekrümmte Wärmedehnungsausgleichsbereich 19a bildet eine zumindest teilweise um den Zentralkanal 16a umlaufende Wölbung 20a aus.

Der Grundkörper 14a weist vorzugsweise einen Peripheriebereich 26a auf. Eine Haupterstreckungsebene des Peripheriebereichs 26a verläuft insbesondere zumindest im Wesentlichen senkrecht zu der Kanalmittenachse 16a. Insbesondere schließt der Peripheriebereich 26a an den Zentralkanal 16a an. Vorzugsweise führt die Wölbung 20a den Zentralkanal 16a in den Peripheriebereich 26a über. Der Peripheriebereich 26a umfasst insbesondere eine Fixierungszone 40a. Die Fixierungszone 40a ist vorzugsweise entlang eines Außenrands des Grundkörpers 14a angeordnet. Insbesondere ist der Grundkörper 14a mit der Fixierungszone 40a an dem Fluidanschluss 36a angeordnet. Die Fixierungszone 40a ist insbesondere zu einem Verschweißen des Grundkörpers 14a mit dem Fluidanschluss 36a vorgesehen.

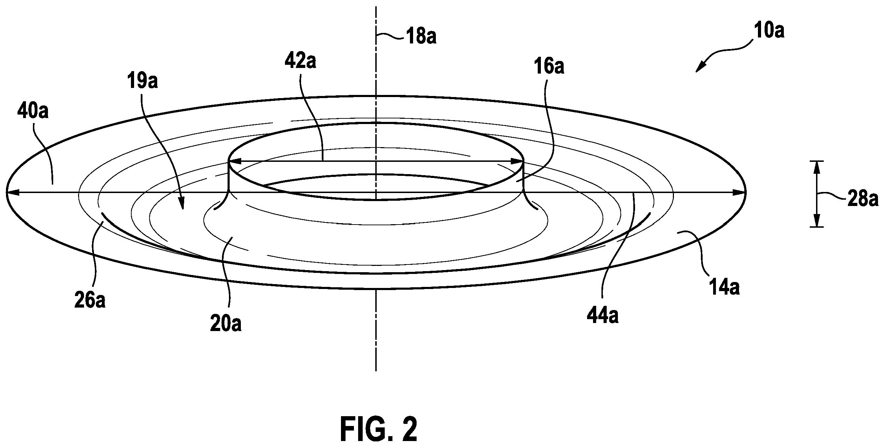

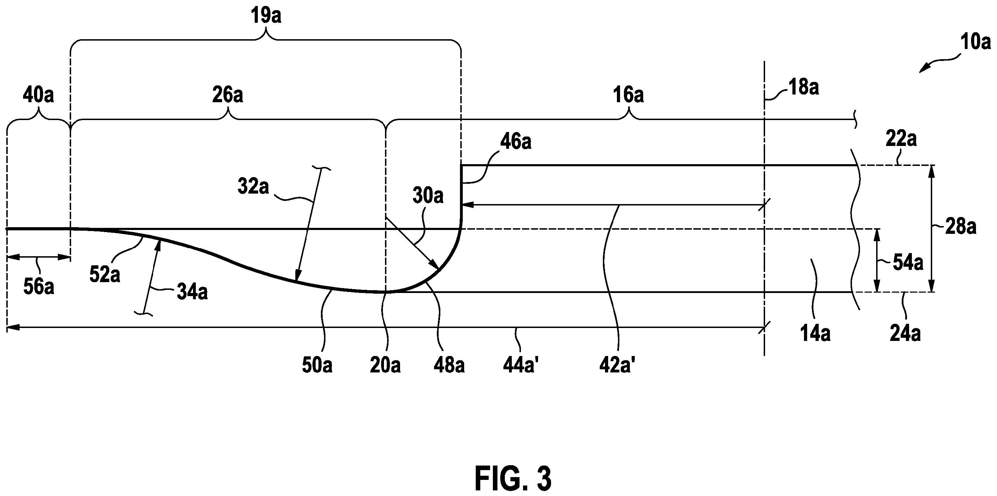

Figur 2 zeigt eine Perspektivdarstellung der Wärmedehnungsausgleichsvorrichtung 10a. Der Grundkörper 14a ist insbesondere als Rotationskörper ausgebildet, der durch Drehung eines in der Schnittebene liegenden Profils um die Kanalmittenachse 18a beschreibbar ist. Das in der Schnittebene liegende Profil wird in Figur 3 näher beschrieben. Der Grundkörper 14a weist insbesondere einen maximale Längserstreckung 28a parallel zur Kanalmittenachse 18a auf. Der Grundkörper 14a weist insbesondere eine maximale Quererstreckung 44a in einer, insbesondere jeder, zur Kanalmittenachse 18a senkrechten Richtung auf. Die maximale Quererstreckung 44a ist insbesondere größer als die maximale Längserstreckung 28a. Insbesondere ist die maximale Längserstreckung 28a kleiner als 25 %, bevorzugt kleiner als 15 %, besonders bevorzugt kleiner als 10 % der maximalen Quererstreckung 44a. Der Zentralkanal 16a weist einen minimalen Außendurchmesser 42a senkrecht zur Kanalmittenachse 18a auf. Der Zentralkanal 16a weist den minimalen Außendurchmesser 42a insbesondere an einem der Hochtemperaturkomponenten 12a zugewandten Ende des Zentralkanals 16a auf. Insbesondere vergrößert sich ein Außendurchmesser des Zentralkanals 16a aufgrund der Wölbung 20a in Richtung eines dem Fluidanschluss 36a zugewandten Endes des Zentralkanals 16a. Vorzugsweise ist der minimale Außendurchmesser 42a größer als die maximale Längserstreckung 28a, insbesondere zumindest doppelt so groß, vorzugsweise mehr als dreimal so groß, besonders bevorzugt mehr als viermal so groß, wie die maximale Längserstreckung 28a. Vorzugsweise ist der minimale Außendurchmesser 42a des Zentralkanals 16a größer als 15 %, bevorzugt größer als 25 %, besonders bevorzugt größer 35 % der maximalen Quererstreckung 44a. Vorzugsweise ist der minimale Außendurchmesser 42a des Zentralkanals 16a kleiner als 75 %, bevorzugt kleiner als 60 %, besonders bevorzugt kleiner als 45 % der maximalen Quererstreckung 44a. Die maximale Quererstreckung 44a beträgt beispielsweise zwischen 50 und 250 mm.

Figur 3 zeigt das in der Schnittebene liegende Profil des Grundkörpers 14a. Die Schnittebene wird insbesondere von der Kanalmittenachse 18a und der maximalen Quererstreckung 44a aufgespannt. Die maximale Quererstreckung 44a ist hier als von der Kanalmittenachse 18a ausgehende radiale Quererstreckung 44a' eingezeichnet, welche insbesondere genau der Hälfte der maximalen Quererstreckung 44a entspricht. Analog ist hier der minimale Außendurchmesser 42a als minimaler Außenradius 42a' dargestellt.

Der Zentralkanal 16a ist durch eine zu der Kanalmittenachse 18a senkrechte Aufnahmeebene 22a und eine zu der Kanalmittenachse 18a senkrechte Anschlussebene 24a begrenzt. Eine Aufnahmeöffnung des Zentralkanals 16a für die Hochtemperaturkomponente 12a ist in der Aufnahmeebene 22a angeordnet. Insbesondere weist der Zentralkanal 16a in der Aufnahmeebene 22a den minimalen Außenradius 42a' auf. Der Wärmedehnungsausgleichsbereich 19a liegt teilweise an der Anschlussebene 24a an. Der den Zentralkanal 16a umgebende Peripheriebereich 26a des Grundkörpers 14a ist aufgrund der Wölbung 20a zumindest abschnittsweise in Richtung der Aufnahmeebene 22a geneigt. Insbesondere ist die Fixierungszone 40a beabstandet von der Aufnahmeebene 22a und der Anschlussebene 24a angeordnet. Der Grundkörper 14a wölbt sich aufgrund der Wölbung 20a in eine von einer Aufnahmeöffnung des Zentralkanals 16a für die Hochtemperaturkomponente 12a abgewandte und zur Kanalmittenachse 18a parallele Richtung. Insbesondere ragt die Wölbung 20a über die Fixierungszone 40a hinaus und insbesondere in den Fluidanschluss 36a hinein (vgl. Fig. 1).

Der zur Aufnahmeebene 22a hin gewölbte Peripheriebereich 26a des Grundkörpers 14a erstreckt sich insbesondere in einer Richtung parallel zur Kanalmittenachse 18a über mehr als 30 %, insbesondere über mehr als 45 %, der maximalen Längserstreckung 28a des Grundkörpers 14a parallel zur Kanalmittenachse 18a. Der zur Aufnahmeebene 22a hin gewölbte Peripheriebereich 26a des Grundkörpers 14a erstreckt sich vorzugsweise in einer Richtung parallel zur Kanalmittenachse 18a über weniger als 75 %, bevorzugt über weniger als 55 %, der maximalen Längserstreckung 28a des Grundkörpers 14a parallel zur Kanalmittenachse 18a. Insbesondere umfasst der Zentralkanal 16a ausgehend von der Aufnahmeebene 22a einen Aufnahmebereich 46a zur Anordnung an dem Prozessfluidauslass 38a. Der Aufnahmebereich 46a verläuft vorzugsweise ausgehend von der Aufnahmeebene 22a zumindest im Wesentlichen parallel zu der Kanalmittenachse 18a. Vorzugsweise ragt der Aufnahmebereich 46a vollständig aus dem Peripheriebereich 26a hervor. Vorzugsweise schließt die Wölbung 20a an den Aufnahmebereich 46a des Zentralkanals 16a an. Insbesondere umfasst die Wölbung 20a zumindest einen Wölbungsabschnitt 48a, der an dem Aufnahmebereich 46a angeordnet ist. Der Wölbungsabschnitt 48a bildet insbesondere einen von dem Aufnahmebereich 46a unterschiedlichen Abschnitt des Zentralkanals 16a aus. Der Wölbungsabschnitt 48a ist in der Schnittebene insbesondere kreisbogenförmig ausgebildet. Insbesondere weist der Wölbungsabschnitt 48a einen Krümmungsradius 30a auf. Der Wölbungsabschnitt 48a erstreckt sich in der Schnittebene insbesondere über einen Kreisbogen von 80° bis 100°, bevorzugt von 85° und 95°, besonders bevorzugt von 87,5° bis 92,5° um einen zu dem Krümmungsradius 30a gehörenden Mittelpunkt. Insbesondere ist der Krümmungsradius 30a größer als eine maximale Erstreckung des Aufnahmebereichs 46a in einer Richtung parallel zu der Kanalmittenachse 18a. Vorzugsweise setzt sich die maximale Längserstreckung 28a aus der maximalen Erstreckung des Aufnahmebereichs 46a, des Krümmungsradius 30a und einer Materialstärke des Grundkörpers 14a zusammen. Der Krümmungsradius 30a des gekrümmten Wärmedehnungsausgleichsbereichs 19a entspricht mehr als 50 % der maximale Längserstreckung 28a des Grundkörpers 14a parallel zur Kanalmittenachse 18a. Insbesondere ist der Krümmungsradius 30a größer als eine maximale Peripherielängserstreckung 54a des Peripheriebereichs 26a parallel zur Kanalmittenachse 18a. Der Krümmungsradius 30a beträgt beispielsweise zwischen 1 und 15 mm, bevorzugt zwischen 3 und 10 mm, besonders bevorzugt zwischen 4 und 8 mm.

Der gekrümmte Wärmedehnungsausgleichsbereich 19a erstreckt sich über mehr als 50 % einer Quererstreckung des Grundkörpers 14a, welche ausgehend von dem Zentralkanal 16a in eine zur Kanalmittenachse 18a quer verlaufende Richtung bis zu einem Außenrand des Grundkörpers 14a verläuft. Die Quererstreckung ist insbesondere gleich der radialen Quererstreckung 44a' des Grundkörpers 14a abzüglich des minimalen Außenradius 42a' des Zentralkanals 16a. Die Wölbung 20a umfasst vorzugsweise einen weiteren Wölbungsabschnitt 50a, der insbesondere in der Schnittebene kreisbogenförmig ausgebildet ist. Der weitere Wölbungsabschnitt 50a umfasst insbesondere einen weiteren Krümmungsradius 32a. Der weitere Wölbungsabschnitt 50a erstreckt sich in der Schnittebene insbesondere über einen Kreisbogen von weniger als 90°, insbesondere weniger als 75°, bevorzugt weniger als 60° um einen zu dem weiteren Krümmungsradius 32a gehörenden Mittelpunkt. Der weitere Wölbungsabschnitt 50a schließt vorzugsweise an den Wölbungsabschnitt 48a an. Die Wölbung 20a umfasst vorzugweise einen zusätzlichen Wölbungsabschnitt 52a, der insbesondere in der Schnittebene kreisbogenförmig ausgebildet ist. Der zusätzliche Wölbungsabschnitt 52a umfasst insbesondere einen zusätzlichen Krümmungsradius 34a. Der zusätzliche Wölbungsabschnitt 52a erstreckt sich in der Schnittebene insbesondere über einen Kreisbogen von weniger als 90°, insbesondere weniger als 75°, bevorzugt weniger als 60° um einen zu dem zusätzlichen Krümmungsradius 34a gehörenden Mittelpunkt. Der zusätzliche Wölbungsabschnitt 52a schließt vorzugsweise an den weiteren Wölbungsabschnitt 50a an.

Der bezogen auf die Kanalmittenachse 18a achsferne weitere Krümmungsradius 32a und/oder der achsferne zusätzliche Krümmungsradius 34a sind/ist größer als der achsnahe Krümmungsradius 30a. Vorzugsweise sind die Mittelpunkte des Krümmungsradius 30a und des weiteren Krümmungsradius 32a auf derselben Seite des Grundkörpers 14a angeordnet. Der bezogen auf die Kanalmittenachse 18a achsnahe Krümmungsradius 30a und/oder weitere Krümmungsradius 32a und der achsferne zusätzliche Krümmungsradius 34a beschreiben je eine gegensinnige Wölbung 20a des Grundkörpers 14a. Insbesondere sind die Mittelpunkte des Krümmungsradius 30a und des weiteren Krümmungsradius 32a auf einer unterschiedlichen Seite des Grundkörpers 14a angeordnet als der Mittelpunkt des zusätzlichen Krümmungsradius 34a. Vorzugsweise ist der weitere Krümmungsradius 32a und der zusätzliche Krümmungsradius 34a gleich groß. Vorzugsweise schließt an den zusätzlichen Krümmungsradius 34a die Fixierungszone 40a an, welche insbesondere zumindest im Wesentlichen senkrecht zu der Kanalmittenachse 18a verläuft. Eine maximale Fixierungsquererstreckung 56 der Fixierungszone 40a ist vorzugsweise kleiner als 25 %, bevorzugt kleiner als 10 %, der radialen Quererstreckung 44a'. Insbesondere erstrecken sich die, insbesondere drei, Wölbungsabschnitte 48a, 50a, 52a von dem Zentralkanal 16a über den Peripheriebereich 26a bis hin zu der Fixierungszone 40a.

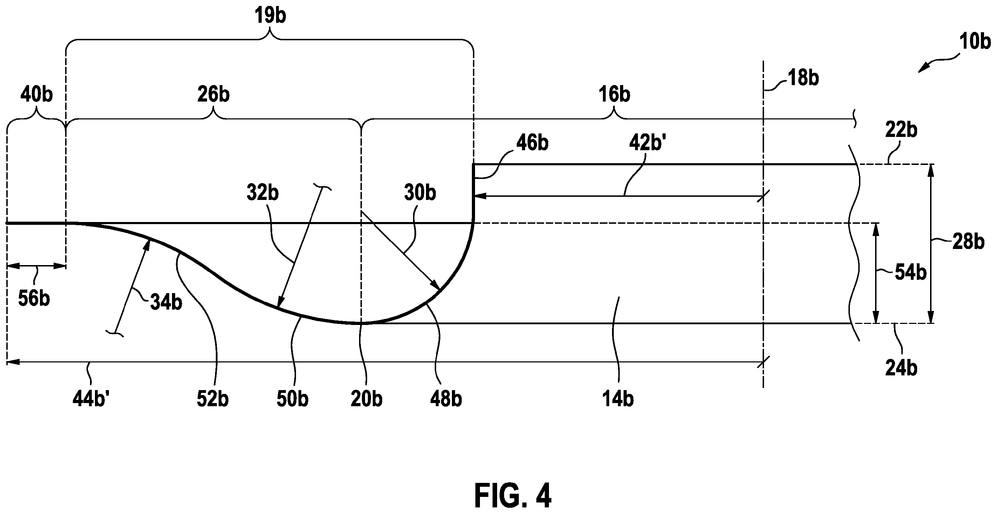

In den Figuren 4 bis 6 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 6 ist der Buchstabe a durch die Buchstaben b bis d ersetzt.

Figur 4 zeigt eine Wärmedehnungsausgleichsvorrichtung 10b für eine Hochtemperaturkomponente, insbesondere für einen Nachbrenner, eines Brennstoffzellensystems. Die Wärmedehnungsausgleichsvorrichtung 10b umfasst einen Grundkörper 14b zu einer Aufnahme von thermomechanischer Energie während einer Temperaturerhöhung der Hochtemperaturkomponente. Der Grundkörper 14b bildet einen Zentralkanal 16b zu einem Durchlass eines Prozessfluids der Hochtemperaturkomponente aus. Der Zentralkanal 16b weist eine Kanalmittenachse 18b auf. Der Grundkörper 14b weist in einer zur Kanalmittenachse 18b parallelen Schnittebene einen gekrümmten Wärmedehnungsausgleichsbereich 19b auf. Der gekrümmte Wärmedehnungsausgleichsbereich 19b bildet eine zumindest teilweise um den Zentralkanal 16b umlaufende Wölbung 20b aus. Ein Krümmungsradius 30b eines Wölbungsabschnitts 48b der Wölbung 20b entspricht insbesondere mehr als 70 % einer maximalen Längserstreckung 28b des Grundkörpers 14b. Der Krümmungsradius 30b beträgt beispielsweise zwischen 1 und 30 mm, bevorzugt zwischen 5 und 15 mm, besonders bevorzugt zwischen 8 und 12 mm. Eine maximale Peripherielängserstreckung 54b eines Peripheriebereichs 26b entspricht insbesondere mehr als 50 %, insbesondere mehr als 60 %, der maximalen Längserstreckung 28b. Insbesondere ist eine Fixierungszone 40b näher an einer den Grundkörper 14b beschränkenden Aufnahmeebene 22b als an einer den Grundkörper 14b beschränkenden Anschlussebene 24b

Bezüglich weiterer Merkmale der Wärmedehnungsausgleichsvorrichtung 10b sei auf die Figuren 1 bis 3 sowie deren Beschreibung verwiesen.

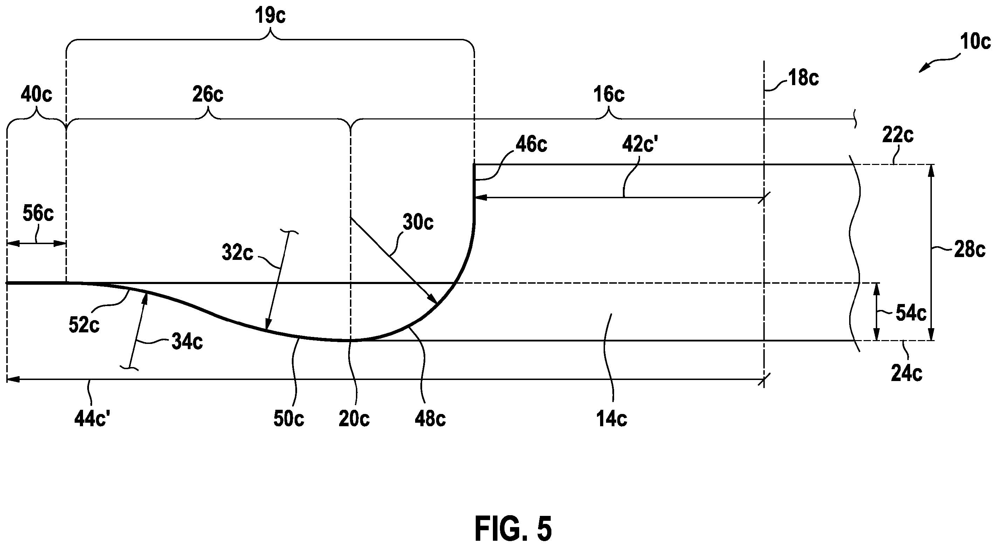

Figur 5 zeigt eine Wärmedehnungsausgleichsvorrichtung 10c für eine Hochtemperaturkomponente, insbesondere für einen Nachbrenner, eines Brennstoffzellensystems. Die Wärmedehnungsausgleichsvorrichtung 10c umfasst einen Grundkörper 14c zu einer Aufnahme von thermomechanischer Energie während einer Temperaturerhöhung der Hochtemperaturkomponente. Der Grundkörper 14c bildet einen Zentralkanal 16c zu einem Durchlass eines Prozessfluids der Hochtemperaturkomponente aus. Der Zentralkanal 16c weist eine Kanalmittenachse 18c auf. Der Grundkörper 14c weist in einer zur Kanalmittenachse 18c parallelen Schnittebene einen gekrümmten Wärmedehnungsausgleichsbereich 19c auf. Der gekrümmte Wärmedehnungsausgleichsbereich 19c bildet eine zumindest teilweise um den Zentralkanal 16c umlaufende Wölbung 20c aus. Ein Krümmungsradius 30c eines Wölbungsabschnitts 48c der Wölbung 20c entspricht insbesondere mehr als 65 % einer maximalen Längserstreckung 28c des Grundkörpers 14c. Der Krümmungsradius 30c beträgt beispielsweise zwischen 1 und 30 mm, bevorzugt zwischen 5 und 15 mm, besonders bevorzugt zwischen 8 und 12 mm. Ein zu einer Aufnahmeebene 22c hin gewölbte Peripheriebereich 26c des Grundkörpers 14c erstreckt sich in einer Richtung parallel zur Kanalmittenachse 18c über weniger als 34 % einer maximale Längserstreckung 28c des Grundkörpers 14c parallel zur Kanalmittenachse 18c.

Bezüglich weiterer Merkmale der Wärmedehnungsausgleichsvorrichtung 10c sei auf die Figuren 1 bis 4 sowie deren Beschreibung verwiesen.

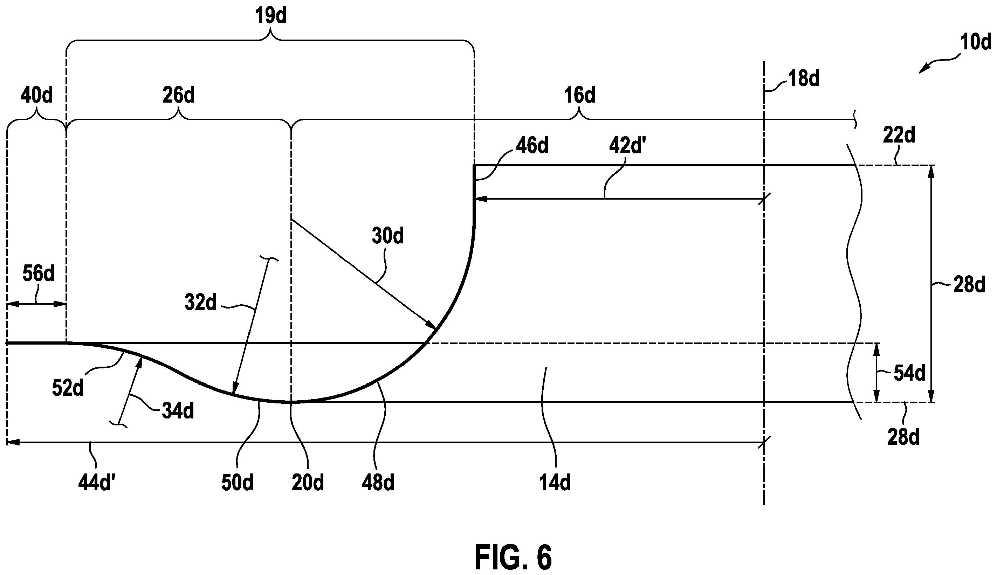

Figur 6 zeigt eine Wärmedehnungsausgleichsvorrichtung 10d für eine Hochtemperaturkomponente, insbesondere für einen Nachbrenner, eines Brennstoffzellensystems. Die Wärmedehnungsausgleichsvorrichtung 10d umfasst einen Grundkörper 14d zu einer Aufnahme von thermomechanischer Energie während einer Temperaturerhöhung der Hochtemperaturkomponente. Der Grundkörper 14d bildet einen Zentralkanal 16d zu einem Durchlass eines Prozessfluids der Hochtemperaturkomponente aus. Der Zentralkanal 16d weist eine Kanalmittenachse 18d auf. Der Grundkörper 14d weist in einer zur Kanalmittenachse 18d parallelen Schnittebene einen gekrümmten Wärmedehnungsausgleichsbereich 19d auf. Der gekrümmte Wärmedehnungsausgleichsbereich 19d bildet eine zumindest teilweise um den Zentralkanal 16d umlaufende Wölbung 20d aus. Ein Krümmungsradius 30d eines Wölbungsabschnitts 48d der Wölbung 20d entspricht insbesondere mehr als 75 % einer maximalen Längserstreckung 28d des Grundkörpers 14d. Der Krümmungsradius 30d beträgt beispielsweise zwischen 1 und 35 mm, bevorzugt zwischen 10 und 22 mm, besonders bevorzugt zwischen 14 und 18 mm. Ein zu einer Aufnahmeebene 22d hin gewölbte Peripheriebereich 26c des Grundkörpers 14d erstreckt sich in einer Richtung parallel zur Kanalmittenachse 18d über weniger als 27,5 % einer maximalen Längserstreckung 28d des Grundkörpers 14d parallel zur Kanalmittenachse 18d.

Bezüglich weiterer Merkmale der Wärmedehnungsausgleichsvorrichtung 10d sei auf die Figuren 1 bis 5 sowie deren Beschreibung verwiesen.

## Patentansprüche

1. Wärmedehnungsausgleichsvorrichtung (10a; 10b; 10c; 10d) für eine Hochtemperaturkomponente (12a), insbesondere für einen Nachbrenner, eines Brennstoffzellensystems, wobei die Wärmedehnungsausgleichsvorrichtung (10a; 10b; 10c; 10d) einen Grundkörper (14a; 14b; 14c; 14d) zu einer Aufnahme von thermomechanischer Energie während einer Temperaturerhöhung der Hochtemperaturkomponente (12a) aufweist, wobei der Grundkörper (14a; 14b; 14c; 14d) einen Zentralkanal (16a; 16b; 16c; 16d) mit einer Kanalmittenachse (18a; 18b; 18c; 18d) zu einem Durchlass eines Prozessfluids der Hochtemperaturkomponente aufweist, wobei der Grundkörper (14a; 14b; 14c; 14d) in einer zur Kanalmittenachse (18a; 18b; 18c; 18d) parallelen Schnittebene einen gekrümmten Wärmedehnungsausgleichsbereich (19a; 19b; 19c; 19d) aufweist, der eine zumindest teilweise um den Zentralkanal (16a; 16b; 16c; 16d) umlaufende Wölbung (20a; 20b; 20c; 20d) ausbildet, wobei der gekrümmte Wärmedehnungsausgleichsbereich (19a; 19b; 19c; 19d) zumindest einen bezogen auf die Kanalmittenachse (18a; 18b; 18c; 18d) achsnahen Krümmungsradius (30a; 30b; 30c; 30d) und einen achsfernen Krümmungsradius (32a, 34a; 32b, 34b; 32c, 34c; 32d, 34d) aufweist, wobei der achsferne Krümmungsradius größer ist als der achsnahe Krümmungsradius, **dadurch gekennzeichnet, dass** die Krümmungsradien (30a, 32a, 34a; 30b, 32b, 34b; 30c, 32c, 34c; 30d, 32d, 34d) des gekrümmten Wärmedehnungsausgleichsbereichs (19a; 19b; 19c; 19d) mehr als 50 % einer maximalen Längserstreckung (28a; 28b; 28c; 28d) des Grundkörpers (14a; 14b; 14c; 14d) parallel zur Kanalmittenachse (18a; 18b; 18c; 18d) entsprechen.

2. Wärmedehnungsausgleichsvorrichtung nach Anspruch 1, **dadurch gekennzeichnet, dass** der Zentralkanal (16a; 16b; 16c; 16d) durch eine zu der Kanalmittenachse (18a; 18b; 18c; 18d) senkrechte Aufnahmeebene (22a; 22b; 22c; 22d) und eine zu der Kanalmittenachse (18a; 18b; 18c; 18d) senkrechte Anschlussebene (24a; 24b; 24c; 24d) begrenzt ist, wobei eine Aufnahmeöffnung des Zentralkanals (16a; 16b; 16c; 16d) für die Hochtemperaturkomponente in der Aufnahmeebene (22a; 22b; 22c; 22d) angeordnet ist und der Wärmedehnungsausgleichsbereich (19a; 19b; 19c; 19d) teilweise an der Anschlussebene (24a; 24b; 24c; 24d) anliegt, wobei ein den Zentralkanal (16a; 16b; 16c; 16d) umgebender Peripheriebereich (26a; 26b; 26c; 26d) des Grundkörpers (14a; 14b; 14c; 14d) aufgrund der Wölbung (20a; 20b; 20c; 20d) zumindest abschnittsweise in Richtung der Aufnahmeebene (22a; 22b; 22c; 22d) geneigt ist.

3. Wärmedehnungsausgleichsvorrichtung nach Anspruch 2, **dadurch gekennzeichnet, dass** der zur Aufnahmeebene (22c; 22d) hin gewölbte Peripheriebereich (26c; 26d) des Grundkörpers (14c; 14d) in einer Richtung parallel zur Kanalmittenachse (18c; 18d) über weniger als 34 % einer maximalen Längserstreckung (28c; 28d) des Grundkörpers (14c; 14d) parallel zur Kanalmittenachse (18c; 18d) erstreckt.

4. Wärmedehnungsausgleichsvorrichtung nach einem der vorhergehenden Ansprüche, **dadurch gekennzeichnet, dass** sich der gekrümmte Wärmedehnungsausgleichsbereich (19a; 19b; 19c; 19d) über mehr als 50 % einer Quererstreckung des Grundkörpers (14a; 14b; 14c; 14d) erstreckt, welche ausgehend von dem Zentralkanal (16a; 16b; 16c; 16d) in eine zur Kanalmittenachse (18a; 18b; 18c; 18d) quer verlaufende Richtung bis zu einem Außenrand des Grundkörpers (14a; 14b; 14c; 14d) verläuft.

5. Wärmedehnungsausgleichsvorrichtung nach einem der vorhergehenden Ansprüche, **dadurch gekennzeichnet, dass** sich der Grundkörper (14a; 14b; 14c; 14d) aufgrund der Wölbung (20a; 20b; 20c; 20d) in eine von einer Aufnahmeöffnung des Zentralkanals (16a; 16b; 16c; 16d) für die Hochtemperaturkomponente abgewandte und zur Kanalmittenachse (18a; 18b; 18c; 18d) parallele Richtung wölbt.

6. Wärmedehnungsausgleichsvorrichtung nach einem der vorhergehenden Ansprüche, **dadurch gekennzeichnet, dass** der achsferne Krümmungsradius und der achsnahe Krümmungsradius je einen gegensinnigen Wölbungsabschnitt (48a, 50a, 52a; 48b, 50b, 52b; 48c, 50c, 52c; 48d, 50d, 52d) der Wölbung (20a; 20b; 20c; 20d) des Grundkörpers (14a; 14b; 14c; 14d) beschreiben.

7. Hochtemperaturkomponente (12a), insbesondere Nachbrenner, für ein Brennstoffzellensystem, wobei die Hochtemperaturkomponente (12a) zumindest einer Wärmedehnungsausgleichsvorrichtung (10a; 10b; 10c; 10d) nach einem der vorhergehenden Ansprüche aufweist.

## Claims

1. Thermal-expansion-compensation device (10a; 10b; 10c; 10d) for a high-temperature component (12a), in particular for a secondary burner, of a fuel-cell system, wherein the thermal-expansion-compensation device (10a; 10b; 10c; 10d) has a main body (14a; 14b; 14c; 14d) for absorbing thermomechanical energy during an increase in temperature of the high-temperature component (12a), wherein the main body (14a; 14b; 14c; 14d) has a central channel (16a; 16b; 16c; 16d) with a channel centre axis (18a; 18b; 18c; 18d) for passage of a process fluid of the high-temperature component, wherein the main body (14a; 14b; 14c; 14d) has in a section plane which is parallel to the channel centre axis (18a; 18b; 18c; 18d) a curved thermal-expansion-compensation region (19a; 19b; 19c; 19d) which forms a bulge (20a; 20b; 20c; 20d) that extends at least partially around the central channel (16a; 16b; 16c; 16d), wherein the curved thermal-expansion-compensation region (19a; 19b; 19c; 19d) has at least one radius of curvature (30a; 30b; 30c; 30d) which is close to the channel centre axis (18a; 18b; 18c; 18d) and one radius of curvature (32a, 34a; 32b, 34b; 32c, 34c; 32d, 34d) which is remote from the axis, wherein the radius of curvature remote from the axis is greater than the radius of curvature close to the axis, **characterized in that** the radii of curvature (30a, 32a, 34a; 30b, 32b, 34b; 30c, 32c, 34c; 30d, 32d, 34d) of the curved thermal-expansion-compensation region (19a; 19b; 19c; 19d) correspond to more than 50% of a maximum longitudinal extent (28a; 28b; 28c; 28d) of the main body (14a; 14b; 14c; 14d) parallel to the channel centre axis (18a; 18b; 18c; 18d).

2. Thermal-expansion-compensation device according to Claim 1, **characterized in that** the central channel (16a; 16b; 16c; 16d) is bounded by a receiving plane (22a; 22b; 22c; 22d), which is perpendicular to the channel centre axis (18a; 18b; 18c; 18d), and a connection plane (24a; 24b; 24c; 24d), which is perpendicular to the channel centre axis (18a; 18b; 18c; 18d), wherein a receiving opening of the central channel (16a; 16b; 16c; 16d) for the high-temperature component is arranged in the receiving plane (22a; 22b; 22c; 22d) and the thermal-expansion-compensation region (19a; 19b; 19c; 19d) partially lies in the connection plane (24a; 24b; 24c; 24d), wherein a peripheral region (26a; 26b; 26c; 26d), surrounding the central channel (16a; 16b; 16c; 16d), of the main body (14a; 14b; 14c; 14d) is inclined at least sectionally in the direction of the receiving plane (22a; 22b; 22c; 22d) owing to the bulge (20a; 20b; 20c; 20d).

3. Thermal-expansion-compensation device according to Claim 2, **characterized in that** the peripheral region (26c; 26d) of the main body (14c; 14d), which peripheral region is bulged towards the receiving plane (22c; 22d), in a direction parallel to the channel centre axis (18c; 18d), extends parallel to the channel centre axis (18c; 18d) over less than 34% of a maximum longitudinal extent (28c; 28d) of the main body (14c; 14d).

4. Thermal-expansion-compensation device according to one of the preceding claims, **characterized in that** the curved thermal-expansion-compensation region (19a; 19b; 19c; 19d) extends over more than 50% of a transverse extent of the main body (14a; 14b; 14c; 14d), which extends from the central channel (16a; 16b; 16c; 16d) as far as an outer edge of the main body (14a; 14b; 14c; 14d) in a direction transverse to the channel centre axis (18a; 18b; 18c; 18d).

5. Thermal-expansion-compensation device according to one of the preceding claims, **characterized in that**, owing to the bulge (20a; 20b; 20c; 20d), the main body (14a; 14b; 14c; 14d) is bulged in a direction oriented away from a receiving opening of the central channel (16a; 16b; 16c; 16d) for the high-temperature component and parallel to the channel centre axis (18a; 18b; 18c; 18d).

6. Thermal-expansion-compensation device according to one of the preceding claims, **characterized in that** the radius of curvature remote from the axis and the radius of curvature close to the axis each describe an oppositely directed bulge portion (48a, 50a, 52a; 48b, 50b, 52b; 48c, 50c, 52c; 48d, 50d, 52d) of the bulge (20a; 20b; 20c; 20d) of the main body (14a; 14b; 14c; 14d).

7. High-temperature component (12a), in particular secondary burner, for a fuel-cell system, wherein the high-temperature component (12a) has at least one thermal-expansion-compensation device (10a; 10b; 10c; 10d) according to one of the preceding claims.

## Revendications

1. Dispositif de compensation de dilatation thermique (10a ; 10b ; 10c ; 10d) pour un composant à haute température (12a), en particulier pour une unité de postcombustion, d'un système de pile à combustible, le dispositif de compensation de dilatation thermique (10a ; 10b ; 10c ; 10d) comportant un corps de base (14a ; 14b ; 14c ; 14d) destiné à absorber de l'énergie thermomécanique pendant une élévation de température du composant à haute température (12a), le corps de base (14a ; 14b ; 14c ; 14d) comportant un canal central (16a ; 16b ; 16c ; 16d) avec un axe médian (18a ; 18b ; 18c ; 18d) de canal permettant un passage d'un fluide de processus du composant à haute température, le corps de base (14a ; 14b ; 14c ; 14d) comportant dans un plan de coupe parallèle à l'axe médian (18a ; 18b ; 18c ; 18d) de canal une zone de compensation de dilatation thermique (19a ; 19b ; 19c ; 19d) incurvée, qui forme un bombement (20a ; 20b ; 20c ; 20d) s'étendant au moins en partie en périphérie autour du canal central (16a ; 16b ; 16c ; 16d), la zone de compensation de dilatation thermique (19a ; 19b ; 19c ; 19d) incurvée présentant au moins un rayon d'incurvation (30a ; 30b ; 30c ; 30d) proche de l'axe par rapport à l'axe médian (18a ; 18b ; 18c ; 18d) de canal et un rayon d'incurvation (32a, 34a ; 32b, 34b ; 32c, 34c ; 32d, 34d) éloigné de l'axe, le rayon d'incurvation éloigné de l'axe étant supérieur au rayon d'incurvation proche de l'axe, **caractérisé en ce que** les rayons d'incurvation (30a, 32a, 34a ; 30b, 32b, 34b ; 30c, 32c, 34c ; 30d, 32d, 34d) de la zone de compensation de dilatation thermique (19a ; 19b ; 19c ; 19d) incurvée correspondent à plus de 50 % d'une extension longitudinale maximale (28a ; 28b ; 28c ; 28d) du corps de base (14a ; 14b ; 14c ; 14d) parallèlement à l'axe médian (18a ; 18b ; 18c ; 18d) de canal.

2. Dispositif de compensation de dilatation thermique selon la revendication 1, **caractérisé en ce que** le canal central (16a ; 16b ; 16c ; 16d) est délimité par un plan d'absorption (22a ; 22b ; 22c ; 22d) perpendiculaire à l'axe médian (18a ; 18b ; 18c ; 18d) de canal et un plan de raccordement (24a ; 24b ; 24c ; 24d) perpendiculaire à l'axe médian (18a ; 18b ; 18c ; 18d) de canal, une ouverture d'absorption du canal central (16a ; 16b ; 16c ; 16d) pour le composant à haute température étant disposée dans le plan d'absorption (22a ; 22b ; 22c ; 22d) et la zone de compensation de dilatation thermique (19a ; 19b ; 19c ; 19d) reposant en partie sur le plan de raccordement (24a ; 24b ; 24c ; 24d), une zone périphérique (26a ; 26b ; 26c ; 26d) du corps de base (14a ; 14b ; 14c ; 14d) entourant le canal central (16a ; 16b ; 16c ; 16d) étant inclinée au moins par endroits en direction du plan d'absorption (22a ; 22b ; 22c ; 22d) en raison du bombement (20a ; 20b ; 20c ; 20d).

3. Dispositif de compensation de dilatation thermique selon la revendication 2, **caractérisé en ce que** la zone périphérique (26c ; 26d) du corps de base (14c ; 14d) bombée en direction du plan d'absorption (22c ; 22d) s'étend parallèlement à l'axe médian (18c ; 18d) dans une direction parallèlement à l'axe médian (18c ; 18d) de canal sur moins de 34 % d'une extension longitudinale maximale (28c ; 28d) du corps de base (14c ; 14d).

4. Dispositif de compensation de dilatation thermique selon l'une des revendications précédentes, **caractérisé en ce que** la zone de compensation de dilatation thermique (19a ; 19b ; 19c ; 19d) incurvée s'étend sur plus de 50 % d'une extension transversale du corps de base (14a ; 14b ; 14c ; 14d), laquelle s'étend en partant du canal central (16a ; 16b ; 16c ; 16d) dans une direction s'étendant transversalement à l'axe médian (18a ; 18b ; 18c ; 18d) de canal jusqu'à un bord extérieur du corps de base (14a ; 14b ; 14c ; 14d).

5. Dispositif de compensation de dilatation thermique selon l'une des revendications précédentes, **caractérisé en ce que** le corps de base (14a ; 14b ; 14c ; 14d) se bombe dans une direction opposée à une ouverture d'absorption du canal central (16a ; 16b ; 16c ; 16d) pour le composant à haute température et parallèle à l'axe médian (18a ; 18b ; 18c ; 18d) de canal en raison du bombement (20a ; 20b ; 20c ; 20d).

6. Dispositif de compensation de dilatation thermique selon l'une des revendications précédentes, **caractérisé en ce que** le rayon d'incurvation éloigné de l'axe et le rayon d'incurvation proche de l'axe décrivent chacun une section (48a, 50a, 52a ; 48b, 50b, 52b ; 48c, 50c, 52c ; 48d, 50d, 52d) de bombement en sens inverse du bombement (20a ; 20b ; 20c ; 20d) du corps de base (14a ; 14b ; 14c; 14d).

7. Composant à haute température (12a), en particulier unité de postcombustion, pour un système de pile à combustible, le composant à haute température (12a) comportant au moins un dispositif de compensation de dilatation thermique (10a ; 10b ; 10c ; 10d) selon l'une des revendications précédentes.
